Europäisches Patentamt

(19) European Patent Office

Office européen des brevets

(11) **EP 0 777 392 A2**

(12) **EUROPEAN PATENT APPLICATION**

(43) Date of publication:
04.06.1997 Bulletin 1997/23

(51) Int. Cl.$^6$: **H04N 9/82**

(21) Application number: 96118406.6

(22) Date of filing: 15.11.1996

(84) Designated Contracting States:
DE FR GB

(30) Priority: 28.11.1995 JP 308759/95

(71) Applicant: HITACHI, LTD.
Chiyoda-ku, Tokyo 101 (JP)

(72) Inventors:
• Ohba, Akihiko
Tokyo (JP)

• Ide, Hiroshi
Kodaira-shi, (JP)
• Matsushita, Toru
Kokubunji-shi (JP)

(74) Representative: Strehl Schübel-Hopf Groening &
Partner
Maximilianstrasse 54
80538 München (DE)

(54) **Information storage control method**

(57) An information storage control method using a disk-shaped recording medium (10, 801) includes a step of dividing first video information (A1, A2, A3,...) into a plurality of data blocks, a step of discretely storing in a disk-shaped recording medium (10, 801) the respective data blocks in a time order in a direction of continuously accessing the recording medium at such intervals that allow writing and reading operations of the video information on a real time basis only through the continuous accessing operation to the recording medium without involving the seeking operation and latency thereof, and a step of storing data blocks of second video information (B1, B2, B3,...) in between the data blocks of the first video information discretely stored. Thereby, there is provided a low-cost video information reading and writing apparatus (500) which is fast in its response and which requires a less capacity of buffer memory.

FIG.8

500 READING AND WRITING
INFORMATION APPARATUS
802 RECORDING HEAD

WRITING → 810 VIDEO INFORMATION A (A1,A2,A3 •••)

READING → 820 VIDEO INFORMATION B (B1,B2,B3 •••)

A1  B3
B1  A3
A2  B2

801 RECORDING MEDIA

EP 0 777 392 A2

## Description

BACKGROUND OF THE INVENTION

The present invention relates to a method of controlling storage of information in an information reading and writing apparatus for reading and writing mainly time-continuous information such as video information from and into a disk-shaped recording medium such as optical disk or magnetic disk.

As multimedia age is developed, such applications have been increasingly expanded that a plurality of video images are to be treated at the same time. One of such applications is 3-dimensional (3D) image. There are various means for implementing such 3D image, the simplest means of which is to compose a plurality of images obtained by photographing a single object from different viewing points.

Another of the aforementioned applications is near video on-demand. The near video on-demand means such service that the multi-channel feature of communication channel is made the most of supply in an identical sort of images having different time points on a plurality of channels. In this case, assuming that M denotes a time necessary for supplying the images, N denotes the number of channels used, and that the images are supplied on the respective channels as mutually shifted by a time corresponding to an equal division of the associated image by the number of the used channels on each channel, then a user can see a desired image after user's image request until the user waits a maximum time of M/N or an average time of M/2N. For the purpose of realizing the near video on-demand, it is required for a video server to constantly supply a plurality of streams of an identical type of video information with different time points. As in the above example, in order to treat a plurality of video information simultaneously, such a relatively high-speed disk drive as a magnetic or optical disk drive is desirable as its storage, from the viewpoint of its capacity and speed. In order to treat moving images with the disk drive, further, an image compression technique is indispensable thereto.

Recently remarkable are achievement of a larger capacity of disk drive such as optical or magnetic disk drive as well as development of the image compression technique. With regard to the disk drives, for example, there are already put in practical an optical disk drive which uses a disk of 130mm in diameter with a capacity of lGB or more on its one side and a magnetic disk drive which uses a plurality of disks of 90mm in diameter and which has a total capacity of several GB. With respect to data transfer rate, further, the optical and magnetic disk drives both realize a transfer rate as high as several tens of Mbps. With respect to the image compression technique, meanwhile, MPEG (Moving Picture Experts Group) is set as international standards of the moving image compression. More specifically, MPEGl prescribing an image quality nearly as good as VHS of video tape recorder (VTR) provides a data transfer rate of 1.5Mbps, for which reason storage of moving image corresponding to 10 minutes requires about 100MB of capacity. In order to attain an image quality equal to or higher than the receiving quality of televisions now in circulation, about 4-6Mbps of data transfer rate is necessary and thus the 10-minute moving image requires about 380MB of capacity. From the above consideration, it will be realized that even a single disk drive can nowadays handle a plurality of moving images compressed.

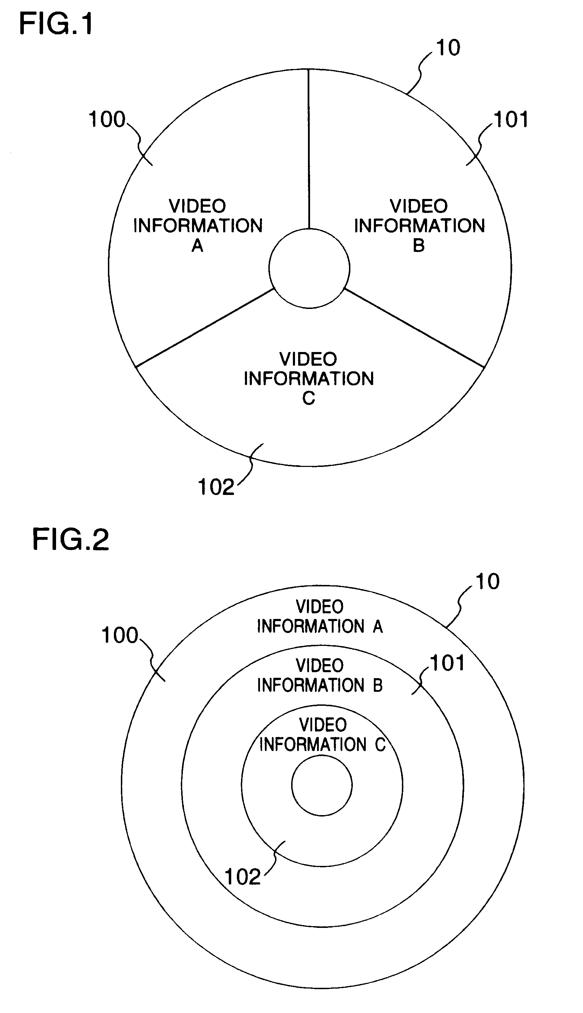

Disks in which such time-continuous data as video information is stored, include, as examples, compact discs (CDs) for use in CD karaoke (sing-along machine) and video CDs. When it is desired to store video information in a disk, in the prior art, one sort of information has been sequentially stored in the disk. That is, when a plurality of pieces of video information are stored in a single disk, the respective pieces of video information have been arranged in the disk in a positionally concentrical relation, as shown in Fig. 2. An example in which video information is stored in a rewritable disk is a CM bank system using magneto-optic disks. Even in this system, video information has been stored in exactly the same manner as the above.

Shown in Fig. 2 is a related art. Consider now to read out a plurality of pieces of related video information form a single disk drive in the prior art. For the sake of simplicity of the explanation, consider a case where two pieces of information, i.e., video information A 100 and video information B 101 are to be read out.

First of all, a head reads out a data block of the video information A 100 from a disk 10, the head seeks the disk for a region of the video information B 101, the disk rotates until the head reaches a target sector, the head reads out a data block of the video information B 100 from the disk, the head seeks the disk for a region of the video information A 100, the disk rotates until the head reaches a target sector, the head reads out the data block of the video information A 100 from the disk, which operations are repeated. In this connection, the head seek and the latency rotation of the disk until the target sector constitute its overhead, which results in that the effective data transfer rate of the disk drive is reduced. As the data block of the video information is made smaller, its response becomes faster but the aforementioned overhead becomes dominant, which makes it difficult to read out a plurality of pieces of video information from a single disk drive. When the data block is made large in order to reduce the overhead, the effective data transfer rate becomes high but the response becomes slow. Thus, this requires a large capacity of buffer memory, which leads to a high apparatus cost. The same explanation holds true for simultaneous writing of a plurality of pieces of video information and also for simultaneous reading and writing of the plurality of pieces of video information.

SUMMARY OF THE INVENTION

It is therefore an object of the present invention to provide an information reading and writing apparatus which can easily realize simultaneous reading or simultaneous writing of a plurality of pieces of video information from a disk drive, or simultaneous reading and writing thereof, which is fast and low in its response and cost and also requires a small capacity of buffer memory.

The above object is attained by dividing first video information into a plurality of data blocks, discretely storing in a disk-shaped recording medium the respective data blocks in a time order in a direction of continuously accessing the recording medium at such intervals that allow reading and writing operations of the video information on a real time basis only through the continuous accessing operation to the recording medium, and storing data blocks of second video information in between the data blocks of the first video information to allow only continuous access to the recording medium without involving the seeking operation and latency rotation thereof to achieve simultaneous writing operation or simultaneous reading operation or simultaneous reading and writing operations over the plurality of pieces of first and second video information.

When an information storage control method of the present invention is employed, only sequential access to the disk enables reading and writing operations of a plurality of pieces of video information and division of video information into a smaller size of data blocks results in no change in its effect. Accordingly, there is provided a low-cost information reading and writing apparatus which can be fast in its response and can require a less capacity of buffer memory.

BRIEF DESCRIPTION OF THE DRAWINGS

Fig. 1 is a plan view of a disk medium in which video information are stored as an example in accordance with the present invention;

Fig. 2 is a plan view of a disk medium in which video information are stored as an example in a related art;

Figs. 3A and 3B are diagrams for explaining a conceptional difference between an embodiment of the present invention and the related art when a plurality of pieces of video information are simultaneously read out;

Fig. 4 is a graph showing a relationship between the number of pieces of video information simultaneously writable and readable and data block size in the present embodiment and the related art;

Fig. 5 is a block diagram of an exemplary arrangement of a 3D imaging system in accordance with an embodiment of the present invention;

Fig. 6 is a block diagram of an exemplary arrangement of a near video on-demand server in accordance with an embodiment of the present invention;

Fig. 7 is a timing chart for explaining the operation of a simple video on-demand system in which the information reading and writing apparatus is built in a terminal; and

Fig. 8 is a diagram for explaining how to implement simultaneous reading and writing of a plurality of pieces of video information according to an information storage control method of the present invention.

DESCRIPTION OF THE PREFERRED EMBODIMENTS

An embodiment of the present invention will be explained in the following with reference to the accompanying drawings.

Fig. 1 shows how to store video information in an embodiment of the present invention. In this case, it is assumed for the sake of simplicity that a disk-shaped recording medium rotates at a constant rotational speed, write/read frequency is constant, and the data transfer rate of an information reading and writing apparatus is substantially 3 times a data transfer rate necessary for reading and writing video information on a real time basis. Further assumption is that the video information are divided into data blocks each corresponding to 1/3 of one track on a disk-shaped recording medium as a data amount. Reference numeral 10 denotes a disk-shaped recording medium such as an optical disk or a magnetic disk, numerals 100 to 102 denote zones in which a plurality of pieces of related video information A, B and C are stored respectively.

In accordance with the present invention, first video information is divided into a plurality of data blocks, discretely storing in a disk-shaped recording medium the respective data blocks in a time order in a direction of continuously accessing the recording medium at such intervals that allow reading and writing operations of the video information on a real time basis only through the continuous accessing operation to the recording medium, and storing data blocks of second video information in between the data blocks of the first video information in the disk-shaped recording medium. To this end, as shown in Fig. 1, the respective video information are stored in the disk-shaped recording medium 10 in a fan or sector form. It will be seen from the above explanation that sequential access to the disk-shaped recording medium 10 enables access to data blocks of different sorts of video information in an order of the data block of the video information A 100, the data block of the video information B 101 and the data block of the video information C 102. Even under such conditions that the rotational speed of the disk-shaped recording medium 10 and a write and read frequency are not constant, according to the information reading and writing apparatus of the present invention, mere sequential access to the disk-shaped recording medium 10 enables access to data blocks of a plurality of pieces of related video information in this order, without involving such an overhead of the seek and latency as mentioned above, though the physical storage form on the disk is different from that of the prior art.

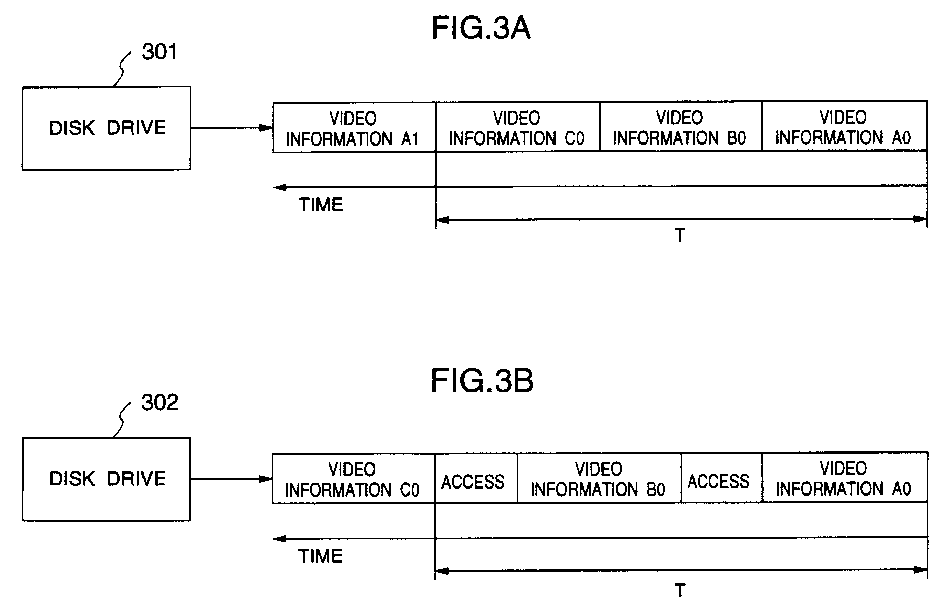

Figs. 3A and 3B are diagrams for explaining a difference in how to read a plurality of pieces of video information simultaneously between the present invention of Fig. 1 and the related art of Fig. 2. In this connection, it is assumed that a disk drive 301 has exactly an equivalent function to a disk drive 302. In the present embodiment of Fig. 3, as already explained in connection with Fig. 1, mere sequential access to the disk-shaped recording medium 10 enables data blocks of video information A 0, video information B 0, video information C 0 and video information A 1 in this order to be read out from the disk drive 301 without overhead. In the prior art, on the other hand, after reading of the video information A 0, there are always present the seeking operation for a track of the video information B 0 and latency until the leading sector of video information B comes. Even after reading of the video information B 0, there is similarly present accessing operation to the video information C 0. In this way, it will be clear from Fig. 2, in the related art, reading of other information always involves the seek and waiting disk rotation. The seek and latency both constitute an overhead, which results in that the effective data transfer rate of the disk drive becomes low.

In Figs. 3A and 3B, a time T indicates a time occupied by decoded data blocks of one sort of a plurality of pieces of video information (such as the video information A 0, video information B 0). In the present embodiment, as assumed in the explanation of Fig. 1, 3 data blocks of different pieces of video information can be read out during the time T. That is, in accordance with the present embodiment, 3 pieces of video information can be read out.

In the related part, however, since the overhead of the seeking operation and latency is inevitably present, it is impossible to read out 3 data blocks of different pieces of video information during the time T. As mentioned above, the present embodiment can read out a more number of pieces of associated video information than that in the related art. Although explanation has been made as to the reading operations of the apparatus in this example, the same explanation holds true in exactly the same manner even for the case where the writing operations or the reading and writing operations take place simultaneously.

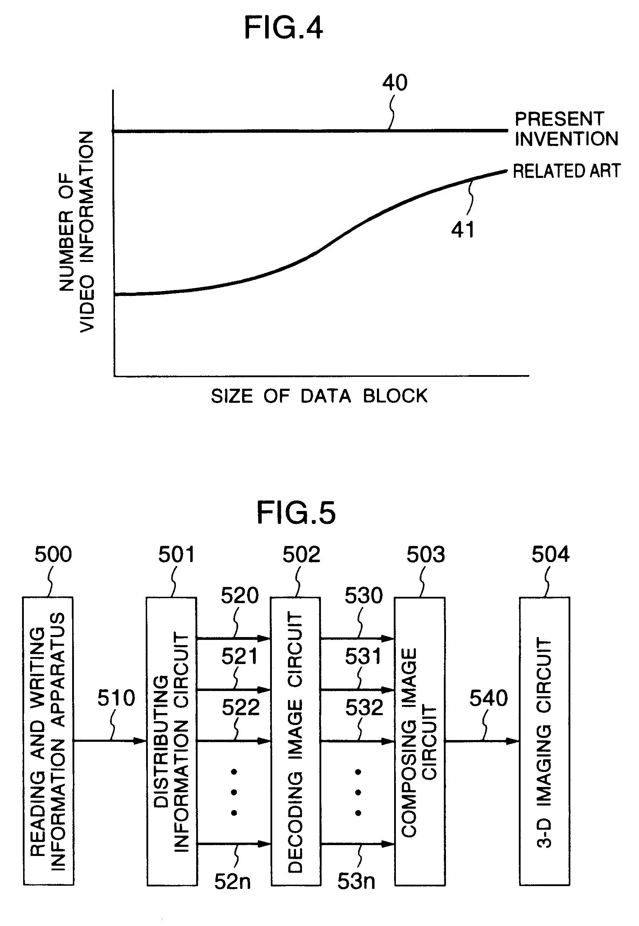

Shown in Fig. 4 is a relationship between the number of pieces of related video information simultaneously writable or readable and the size of a divided data block with respect to the present embodiment and the related art. Fig. 4 corresponds to a generalization of the explanation made in connection with Figs. 3A and 3B. In this conjunction, it is assumed that a data transfer rate M based on the sequential access of the disk drive is expressed in Mbps, a data transfer rate N necessary for reading and writing video information on a real time basis is expressed in Mbps, a time taken for reading or writing one data block is denoted by Trw, and an overhead time caused by the seeking operation and latency is denoted by To. Thus, the number of pieces of related video information simultaneously writable or readable is expressed by $M^*(Trw/Trw + To)/N$. In the present embodiment, there is no overhead of the seeking operation and latency, that is, the above equation satisfies a relation of $(Trw/Trw + To) = I$, whereby the number of pieces of related video information simultaneously writable or readable becomes M/N.

In the related art, since a relation of $(Trw/Trw + To) < I$ is satisfied in $M^*(Trw/Trw + To)/N$, the number of pieces of related video information simultaneously writable or readable becomes always smaller than that in the present embodiment. Further, as the data block size becomes smaller, the $(Trw/Trw + To)$ becomes smaller, which results in such a result as shown in Fig. 4. Taking the necessary capacity of a buffer memory into consideration, it is desirable that the size of data blocks to be divided is as small as possible. As will be seen from Fig. 4, in the present embodiment, even when the data block size is made small, the number of pieces of related video information simultaneously writable or readable will not be changed. For this reason, it will be understood that the present embodiment can provide a low-cost information reading and writing apparatus, since a smaller data block size results in a faster response and a requirement of a less capacity of buffer memory.

Explanation will next be made as to an example of a system based on an information storage control method of the present invention.

Fig. 5 is an example of an arrangement of a 3D imaging system in which attention is focused only on flows of video information in particular and the other system constituent elements are omitted. In the drawing, reference numeral 500 denotes an information reading and writing apparatus, numeral 501 denotes an information distributing circuit, 502 a video decoding circuit, 503 a image composing circuit, 504 a 3D imaging circuit.

The information reading and writing apparatus 500 contains a disk-shaped recording medium in which a plurality of pieces of related video information are stored, these video information having the same space and different viewing points and the same time point. When this is explained in connection with the example of Fig. 1, the video information A 100, video information B 101 and video information C 102 are information having the same space and different viewing points; while the video information present on the same track are information having the same time point.

Explanation will then be made as to the operation of the 3D imaging operation. When receiving a 3D imaging command, the information reading and writing apparatus 500 reads a serial data stream 510 of (N + I) (N I, N being an integer) pieces of video information having the same space, different viewing points and the same time point. If the single disk drive cannot read the (N + I)

pieces of video information, in this case, then a plurality of disk drives are employed in the information reading and writing apparatus 500. The serial data stream 510 is distributed at the information distributing circuit 501 to (N + l) pieces of video information 520 to 52n. When these video information 520 to 52n are compressed data, these information are subjected at the image decoding circuit 502 to an expanding operation into video information 530 to 53n. The (N + l) pieces of video information 530 to 53n having the same space, different viewing points and the same time point are composed by the image composing circuit 503 into a 3D image 540, which in turn is sent to the 3D imaging circuit 504 to be displayed thereon as a three-dimensional or solid image. The 3D imaging operation has been briefly explained above. The 3D imaging system is considered to be increasingly important in a coming-soon multimedia age. To this end, when the information storage control method of the present invention is employed, there can be formed a system which is low in cost and high in performance.

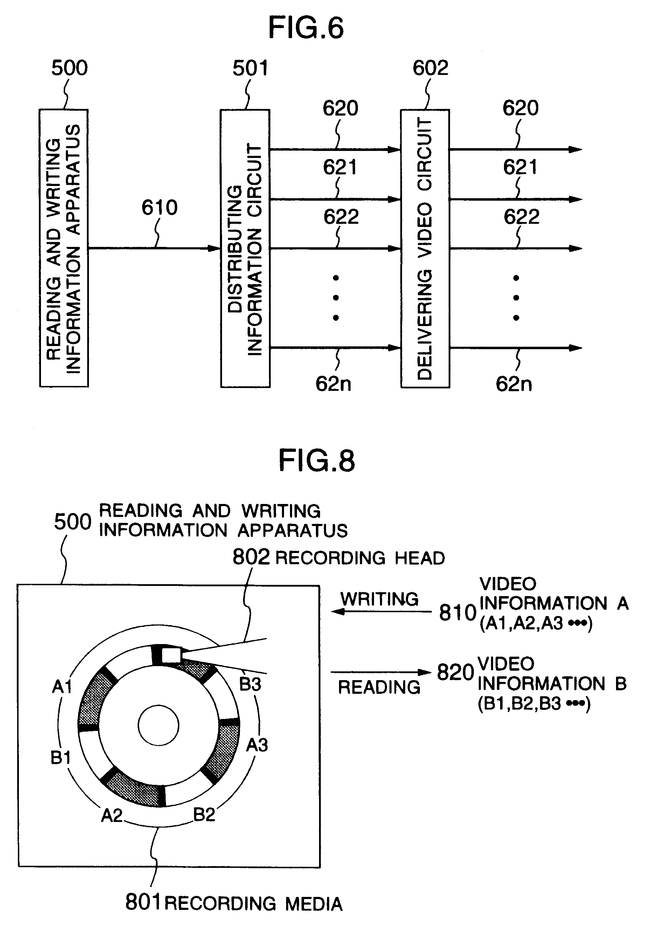

Fig. 6 is an exemplary configuration of a near video on-demand server based on an information reading and writing apparatus based on the information storage control method of the present invention. Even in this drawing, attention is focused only on flows of video information and the other constituent elements are omitted. In the drawing, reference numeral 500 denotes an information reading and writing apparatus based on the information storage control method of the present invention, numeral 501 denotes an information distributing circuit, and 602 denotes a video delivering circuit. The near video on-demand server is required to have an ability to constantly supply a plurality of streams of the same sort of video information having different time points. To this purpose, the information reading and writing apparatus 500 has a disk-shaped recording medium in which the plurality of streams of the same sort of video information having different time points are stored. When explanation is made in connection with the example of Fig. 1, the video information A 100, video information B 101 and video information C 102 are information of the same sort but information having different time points are stored on the same track. As a result, the information reading and writing apparatus 500 can constantly supply a plurality of the same sort of video information having different time points merely through its sequential accessing operation. In this way, in accordance with the information storage control method of the present invention, there can be formed a simple, high-performance, low-cost server.

Explanation will then be made as to flows of video information in the near video on-demand server. Merely sequential access to the disk-shaped recording medium enables the information reading and writing apparatus 500 using the information storage control method of the present invention to supply a serial data stream 610 of data blocks corresponding to divisions of (N + l) (N l, N being an integer) pieces of the same sort of video information having different time points. The serial data stream 610 is distributed at the information distributing circuit 501 to (N + l) pieces of the same sort of video information 620 to 62n having different time points. The plurality of pieces of the same sort of video information 620 to 62n having different time points are delivered by the video delivering circuit 602 to realize the near video on-demand service.

The next explanation is directed to the video on-demand service easily realized by the information reading and writing apparatus based on the information storage control method of the present invention. The video on-demand service refers to such a service that a user can see a desired video at a desired time by utilizing mutual communication between the user and server and that also has an interactivity such as pause function. Realization of this service necessitates a two-way communication network using optical fiber and covering a wide area as well as such a server that has an extremely large capacity, an extremely high speed feature and an extremely high performance, thus involving exceptionally high costs in the upgrading of its infrastructure. For this reason, with the current state of the art, we cannot find any bright prospect of realizing it. Instead, the aforementioned near video on-demand service is being put in practical use. Explanation will be made here as to the video on-demand service which can be easily realized by using the near video on-demand service when the information reading and writing apparatus using the information storage control method of the present invention is built in a user terminal (set top box, which will be referred to merely as STB, hereinafter).

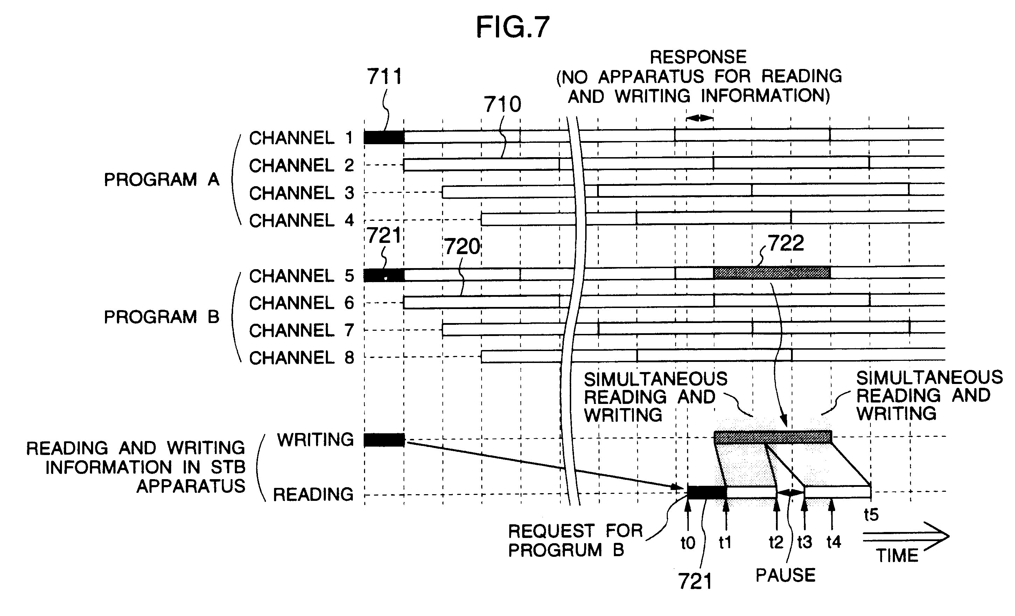

Fig. 7 is a diagram for explaining the principle of the video on-demand service of the present embodiment, wherein a horizontal axis denotes a time axis. In the same drawing, programs A and B each use a plurality of channels (4 channels in the illustrated example) to perform the near video on-demand service, and elongated white rectangles on the axes of the channels indicate the video information of the programs A and B. Black elongated rectangles 711 and 721 indicate the leading parts (leading video information corresponding to 1/4 of each program, in the illustrated example) of the programs A and B respectively. Elongated black rectangles on the write and read axes of the information reading and writing apparatus in the STB indicate that associated video information are written and read at respective time points respectively. In the usual near video on-demand service, when a user issues a request for the program B at a time t0 in Fig. 7, a wait time corresponds to a time duration from the time t0 to a time t1 at which one (channel 6, in this example) of the channels first meets the leading data of the program B. The user can see the program B starting with the time t1, but cannot conduct such interactive operation as pause as in ordinary TV broadcasting.

In the present embodiment, the leading parts 711 and 721 of the programs A and B having the near video on-demand service function are previously stored in the information reading and writing apparatus in the STB according to the information storage control method of the present invention. As soon as the user issues a request for the program B at the time t0, this causes data on the leading part 721 of the program B previously stored in the in-STB information reading and writing apparatus to start to be read out. The video information of one (channel 5, in this example) of the channels which is followed by the leading part 721 of the program B and which first appears, is previously stored in the in-STB information reading and writing apparatus from the time t1 on according to the information storage control method of the present invention. Following the time t1, the in-STB information reading and writing apparatus performs simultaneous writing and reading operations over a plurality of pieces of video information, which operation will be explained in more detail in connection with Fig. 8. Data blocks (B1, B2, B3) of video information B 820 to be read out are stored on a disk-shaped recording medium as divided into sectors according to the information storage control method of the present invention, as shown in Fig. 8. Data blocks (A1, A2, A3) of video information A 810 to be written are stored in between the data blocks of the video information B 820 according to the information storage control method of the present invention. In accordance with the present invention, only continuous access to the recording medium without involving the seeking operation and latency enables the writing of the video information A 810 and the reading of the video information B 820 to be simultaneously achieved with ease. Further, since this is achieved regardless of the size of the division data blocks, there can be provided an STB which is fast in response and low in cost and which also requires a less capacity of buffer memory.

Subsequently, when the user pauses the apparatus at a time t2, the video information of the channel 5 is written in the in-STB information reading and writing apparatus according to the information storage control method of the present invention and the apparatus temporarily stops its reading operation until a time t3 at which the pause is released. From the time t3, the apparatus starts its reading operation of the video information following the reading operation paused at the time t2. At a time t4, the last part of the video information of the program B is supplied. During a time period from the time t3 to the time t4, the in-STB information reading and writing apparatus performs its simultaneous writing and reading operations over a plurality of pieces of video information, in exactly the same manner as the time period from the time t1 to the time t2.

It will be appreciated from the foregoing explanation that the information reading and writing apparatus is incorporated in the STB and the easy realization of the video on-demand service using the near video on-demand service requires the information reading and writing apparatus to perform its simultaneous writing and reading operations over a plurality of pieces of video information. As has been explained in the foregoing, in accordance with the information reading and writing apparatus based on the information storage control method of the present invention, there can be provided a low-cost STB which allows easy realization of simultaneous writing and reading operations over a plurality of pieces of video information and which is fast in response and requires a less capacity of buffer memory.

Even when it is desired to perform simultaneous reading operation or simultaneous writing operation or simultaneous writing and reading operations over a plurality of pieces of video information as in embodiments other than the present embodiment, the present invention can exhibit favorable effects.

In accordance with the present invention, there can be provided a low-cost information reading and writing apparatus which allows easy realization of simultaneous reading or simultaneous writing or simultaneous writing and reading operations over a plurality of pieces of video information and which is fast in response and requires a less capacity of buffer memory.

## Claims

1. An information storage control method in an information reading and writing apparatus (500) for writing and reading out video information (A, B, C; 100, 101, 102) as time-continuous information in and from a disk-shaped recording medium (10; 801), characterized by comprising the steps of:

   dividing arbitrary video information into a plurality of data blocks; and
   discretely storing in the recording medium (10, 801) the respective data blocks in a time order in a direction of continuously accessing the recording medium at such intervals that allow writing and reading operations of the information on a real time basis only through the continuous accessing operation without involving seeking operation of the recording medium and latency thereof.

2. An information storage control method in an information reading and writing apparatus for writing and reading out video information as time-continuous information in and from a disk-shaped recording medium (801), characterized by comprising the steps of:

   dividing first video information (A1, A2, A3...) into a plurality of data blocks;
   discretely storing in the recording medium (801) the respective data blocks in a time order in a direction of continuously accessing the recording medium at such intervals that allow writing and reading operations of the information on a real time basis only through the continuous accessing operation without involving seeking operation of the recording medium and latency thereof; and

storing data blocks of second video information (B1, B2, B3...) in between the data blocks of said first video information discretely stored.

3. An information storage control method as set forth in claim 2, characterized in that, when there is a write request of writing said second video information (B1, B2, B3...) during writing or reading operation of said first video information (A1, A2, A3...), the data blocks of said second video information subjected to said write request are stored in between the data blocks of said first video information during the writing or reading operation to allow only continuous access to said recording medium (801) without involving the seeking operation and latency thereof to achieve simultaneous writing operation or simultaneous writing and reading operations over said first and second video information.

4. An information storage control method as set forth in claim 2, characterized in that, when there is a read request of reading said second video information during writing operation of said first video information (A1, A2, A3,...), the data blocks of said first video information during the writing operation are stored in between the data blocks of said second video information (B1, B2, B3,...) subjected to the read request to allow only continuous access to said recording medium (801) without involving the seeking operation and latency thereof to achieve simultaneous writing and reading operations over said first and second video information.

5. An information storage control method as set forth in claim 3 or 4, characterized in that a plurality of pieces of video information to be subjected to the simultaneous writing operation or simultaneous writing and reading operations are information having the same space, different viewing points and the same time point.

6. An information storage control method as set forth in claim 3 or 4, characterized in that a plurality of pieces of video information to be subjected to the simultaneous writing operation or simultaneous writing and reading operations are information having the same sort and different time points.

7. An information storage control method as set forth in one of claim 2 to 6, characterized in that arbitrary video information and voice information are stored as divided into a plurality of data blocks each having the same data amount.

8. An information storage control method as set forth in one of claim 2 to 6, characterized in that arbitrary video information and voice information are stored as divided into a plurality of data blocks having the same time when converted into moving image and voice.

9. In an information reading and writing method for accessing a rotating, disk-shaped recording medium (801) having substantially concentrical recording tracks to seek for a plurality of time-series data (A1, A2, A3,...; B1, B2, B3,...); an information storage control method characterized by comprising the steps of:

dividing first time-series data (A1, A2, A3,...) into a plurality of data blocks;

discretely storing the data blocks in a time order along the recording tracks of said recording medium;

dividing second time-series data (B1, B2, B3,...) into a plurality of data blocks;

discretely storing the data blocks of said second time-series data in a time order along the recording tracks of said recording medium (801); and

arranging the data blocks of said second time-series data in between the data blocks of said first time-series data.

10. An information processing method for accessing a rotating, disk-shaped recording medium (801) having substantially concentrical recording tracks to seek for a plurality of time-series data (A1, A2, A3,...; B1, B2, B3,...), characterized by comprising the steps of:

dividing said plurality of time-series data into a plurality of data blocks;

discretely storing the data blocks of said plurality of time-series data in a time order along the recording tracks of said recording medium (801);

arranging the data blocks of said plurality of time-series data to alternately appear on said recording tracks; and

reading a series of data corresponding a mixture of the data blocks of said plurality of time-series data along said recording tracks.

11. An information processing method as set forth in claim 10, characterized by further comprising the step of separating said plurality of time-series data from said series of data for decoding of the data.

FIG.1

FIG.2

# FIG.3A

301

| DISK DRIVE |

| VIDEO INFORMATION A1 | VIDEO INFORMATION C0 | VIDEO INFORMATION B0 | VIDEO INFORMATION A0 |

TIME

T

# FIG.3B

302

| DISK DRIVE |

| VIDEO INFORMATION C0 | ACCESS | VIDEO INFORMATION B0 | ACCESS | VIDEO INFORMATION A0 |

TIME

T

EP 0 777 392 A2

# FIG.4

PRESENT INVENTION

40

RELATED ART

41

NUMBER OF VIDEO INFORMATION

SIZE OF DATA BLOCK

# FIG.5

500 — READING AND WRITING INFORMATION APPARATUS

510

501 — DISTRIBUTING INFORMATION CIRCUIT

520
521
522
⋮
52n

502 — DECODING IMAGE CIRCUIT

530
531
532
⋮
53n

503 — COMPOSING IMAGE CIRCUIT

540

504 — 3-D IMAGING CIRCUIT

# FIG.6

500 READING AND WRITING INFORMATION APPARATUS

610

501 DISTRIBUTING INFORMATION CIRCUIT

602 DELIVERING VIDEO CIRCUIT

620
621
622
⋮
62n

620
621
622
⋮
62n

# FIG.8

500 READING AND WRITING INFORMATION APPARATUS

802 RECORDING HEAD

WRITING

810 VIDEO INFORMATION A (A1,A2,A3 •••)

READING

820 VIDEO INFORMATION B (B1,B2,B3 •••)

A1
B1
A2
B2
A3
B3

801 RECORDING MEDIA

# FIG.7

EP 0 777 392 A2